# EUROPEAN PATENT APPLICATION

(11) **EP 3 860 275 A1**
(43) Date of publication of application: **04.08.2021**
(21) Application number: 19880471.8
(22) Date of filing: 23.10.2019
(51) Int. Cl.: H04W 72/04

(54) **RESOURCE INDICATION METHOD AND COMMUNICATION DEVICE**

(30) Priority: 02.11.2018 CN 201811301422
(71) Applicant: Datang Mobile Communications Equipment Co., Ltd., Beijing 100083 (CN)
(72) Inventor: FENG, Yuan, Beijing 100191 (CN); CHENG, Fangchen, Beijing 100191 (CN); ZHAO, Rui, Beijing 100191 (CN); HU, Jinling, Beijing 100191 (CN)
(74) Representative: dompatent von Kreisler Selting Werner - Partnerschaft von Patent- und Rechtsanwälten mbB
(86) International application number: PCT/CN2019/112673
(87) International publication number: WO 2020/088313

(57) **Abstract**

The present disclosure provides a resource indication method and a communication device. The resource indication method includes indicating feedback resources used by a receiving end in unicasting and/or multicasting transmission to the receiving end, the feedback resources at least including an HARQ ACK feedback resource or an HARQ NACK feedback resource for the receiving end.

## Description

### CROSS-REFERENCE TO RELATED APPLICATION

The present application claims a priority of the Chinese patent application No. 201811301422.7 filed on November 2nd, 2018, which is incorporated herein by reference in its entirety.

### TECHNICAL FIELD

The present disclosure relates to the field of communication application, in particular to a resource indication method and a communication device.

### BACKGROUND

Vehicle to everything (V2X) technology may sense in real time a surrounding environment about a vehicle, share road information and give a warning in time by means of wireless communication between vehicles, between the vehicle and road test infrastructure, and between the vehicle and passers-by, and thus it has currently become a research hotspot for dealing with road safety issues all over the world.

In a related Long Term Evolution (LTE) V2X technology (Rel-14 LTE V2X), a PC5 interface for transmitting data between User Equipments (UEs) (also called as direct communication link, i.e., side link described in the protocol) has already been used to support the transmission of basic road safety-based services.

Along with the development of Internet of Vehicles (IoV) technology, some new application scenarios occur, e.g., vehicle platoon marshalling, advanced driving, information sharing among sensors, and remote control. In some of these applications, multicast communication is required among the UEs in one groups, or unicast communication is required between two UEs. However, there is currently no related scheme about the definition and indication of feedback resources between the UEs in unicasting and multicasting transmission.

### SUMMARY

An object of the present disclosure is to provide a resource indication method and a communication device, so as to solve the problem that there is currently no related scheme about the definition and indication of the feedback resources between the UEs in the unicasting and multicasting transmission.

In one aspect, the present disclosure provides in some embodiments a resource indication method for a transmitting end, including indicating feedback resources used by a receiving end in unicasting and/or multicasting transmission to the receiving end, the feedback resources at least including a Hybrid Automatic Repeat Request (HARQ) Acknowledgement (ACK) feedback resource or an HARQ Negative Acknowledgement (NACK) feedback resource for the receiving end.

In some possible embodiments of the present disclosure, the indicating the feedback resources used by the receiving end in the unicasting and/or multicasting transmission to the receiving end includes: selecting a Physical Sidelink Shared Channel (PSSCH) resource and a Physical Sidelink Control Channel (PSCCH) resource, selected service resources being associated with the feedback resources and including the PSSCH resource or the PSCCH resource; and indicating the selected PSSCH resource to the receiving end through Scheduling Control Information (SCI) of the PSCCH resource.

In some possible embodiments of the present disclosure, subsequent to selecting the PSSCH resource and the PSCCH resource, the resource indication method further includes indicating position information about the feedback resource associated with the service resource and/or indicating whether the selected service resource is associated with the feedback resource through a first target field message in the SCI. The first target field message includes at least one of a destination Identity (ID), a destination group ID, a source node ID, a link ID and a predetermined field message.

In some possible embodiments of the present disclosure, prior to indicating the feedback resources used by the receiving end in the unicasting and/or multicasting transmission to the receiving end, the resource indication method further includes determining a codeword, a sequence and/or an offset value used by the receiving end for feedback in a connection establishment procedure with the receiving end or in accordance with a second target field message in SCI. The second target field message includes at least one of a destination ID, a destination group ID, a source node ID, a link ID and an offset indication field.

In some possible embodiments of the present disclosure, subsequent to indicating the feedback resources used by the receiving end in the unicasting and/or multicasting transmission to the receiving end, the resource indication method further includes: performing relevant detection on the determined codeword and/or sequence at a position corresponding to each feedback resource to acquire a feedback result from the receiving end; and determining whether to perform retransmission in accordance with the feedback result.

In some possible embodiments of the present disclosure, when the service resources are associated with the feedback resources, the feedback resources are associated with the service resources in a time domain and/or a frequency domain.

In some possible embodiments of the present disclosure, when the feedback resources are associated with the service resources in the time domain, the feedback resources are mapped to the service resources respectively in the time domain, each feedback resource is spaced apart from the corresponding service resource in the time domain by N time units, each time unit includes an Orthogonal Frequency Division Multiplexing (OFDM) symbol, a Transmission Time Interval (TTI) and a transmission subframe, and N is a positive integer; or each resource pool is associated with a time interval corresponding to the feedback resource, and the resource pool includes the PSSCH resource and the PSCCH resource; or each carrier is associated with a fixed time interval between the feedback resource and the service resource; or each service is associated with a fixed time interval between the feedback resource and the service resource, and the service includes a Quality of Service (QoS) related parameter and/or a Per Package Per Priority (PPPP).

In some possible embodiments of the present disclosure, when the feedback resources are associated with the service resources in the frequency domain, each feedback resource has a same frequency-domain start point and a same frequency domain size as the corresponding service resource; or the frequency domain start point of each feedback resource is an M^{th} resource unit of the corresponding service resource, the frequency domain size is a fixed numerical unit, and M is a positive integer; or the feedback resources are associated with carriers and/or a root resource pool. The resource unit is a Resource Element (RE), a Physical Resource Block (PRB) or a sub-channel.

In some possible embodiments of the present disclosure, the selecting the PSSCH resource and the PSCCH resource includes: determining a target time interval corresponding to each feedback resource used by the receiving end in accordance with a service delay and a capability of the receiving end for receiving, processing and transmitting a feedback; and selecting a target resource pool corresponding to the target time interval in accordance with an association relationship between the resource pool and the time interval corresponding to each feedback resource, and selecting the service resource from the selected target resource pool.

In another aspect, the present disclosure provides in some embodiments a resource indication method for a receiving end, including acquiring feedback resources used by the receiving end in unicasting and/or multicasting transmission and indicated by a transmitting end, the feedback resources at least including an HARQ ACK feedback resource or an HARQ NACK feedback resource for the receiving end.

In some possible embodiments of the present disclosure, the acquiring the feedback resources used by the receiving end in the unicasting and/or multicasting transmission and indicated by the transmitting end includes: acquiring a PSSCH resource indicated by the transmitting end through SCI in a PSCCH resource, selected service resources being associated with the feedback resources and including the PSSCH resource or the PSCCH resource; and determining the feedback resources in accordance with a preconfigured association relationship between the service resources and the feedback resources as well as the service resources.

In some possible embodiments of the present disclosure, the determining the feedback resources in accordance with the preconfigured association relationship between the service resources and the feedback resources as well as the service resources includes: determining the feedback resources in accordance with the preconfigured association relationship between the service resources and the feedback resources, position information about each feedback resource associated with the corresponding service resource and indicated by the transmitting end, and the service resources; or determining whether the service resource is associated with the corresponding feedback resource in accordance with a first target field message in the SCI, and in the case that the service resource is associated with the corresponding feedback resource, determining the feedback resources in accordance with the preconfigured association relationship between the service resources and the feedback resources as well as the service resources. The first target field message includes at least one of a destination ID, a destination group ID, a source node ID, a link ID and a predetermined field message.

In some possible embodiments of the present disclosure, prior to acquiring the feedback resources used by the receiving end in the unicasting and/or multicasting transmission and indicated by the transmitting end, the resource indication method further includes determining a codeword, a sequence and/or an offset value used by the receiving end for feedback in a connection establishment procedure with the receiving end or in accordance with a second target field message in SCI. The second target field message includes at least one of a destination ID, a group ID, a source node ID, a link ID and an offset indication field.

In some possible embodiments of the present disclosure, subsequent to acquiring the feedback resources used by the receiving end in the unicasting and/or multicasting transmission and indicated by the transmitting end, the resource indication method further includes transmitting a feedback result on the feedback resources using the codeword, the sequence and/or the offset value.

In some possible embodiments of the present disclosure, when the service resources are associated with the feedback resources, the feedback resources are associated with the service resources in a time domain and/or a frequency domain.

In some possible embodiments of the present disclosure, when the feedback resources are associated with the service resources in the time domain, the feedback resources are mapped to the service resources respectively in the time domain, each feedback resource is spaced apart from the corresponding service resource in the time domain by N time units, each time unit includes an OFDM symbol, a TTI and a transmission subframe, and N is a positive integer; or each resource pool is associated with a time interval corresponding to the feedback resource, and the resource pool includes the PSSCH resource and the PSCCH resource; or each carrier is associated with a fixed time interval between the feedback resource and the service resource; or each service is associated with a fixed time interval between the feedback resource and the service resource, and the service includes a QoS related parameter and/or a PPPP.

In some possible embodiments of the present disclosure, when the feedback resources are associated with the service resources in the frequency domain, each feedback resource has a same frequency-domain start point and a same frequency domain size as the corresponding service resource; or the frequency domain start point of each feedback resource is an M^{th} resource unit of the corresponding service resource, the frequency domain size is a fixed numerical unit, and M is a positive integer; or the feedback resources are associated with carriers and/or a root resource pool. The resource unit is an RE, a PRB or a sub-channel.

In some possible embodiments of the present disclosure, the determining the feedback resources in accordance with the preconfigured association relationship between the service resources and the feedback resources as well as the service resources includes: determining a target resource pool corresponding to the service resources; determining a target time interval associated with the target resource pool in accordance with a preconfigured association relationship between pool resources and time intervals corresponding to the feedback resources; and determining the feedback resources corresponding to the target time interval.

In yet another aspect, the present disclosure provides in some embodiments a communication device, which is a transmitting end and includes a transceiver, a memory, a processor, and a program stored in the memory and executed by the processor. The processor is configured to execute the program so as to indicate feedback resources used by a receiving end in unicasting and/or multicasting transmission to the receiving end, the feedback resources at least including an HARQ ACK feedback resource or an HARQ NACK feedback resource for the receiving end.

In some possible embodiments of the present disclosure, the processor is further configured to execute the program, so as to: select a PSSCH resource and a PSCCH resource, selected service resources being associated with the feedback resources and including the PSSCH resource or the PSCCH resource; and indicate the selected PSSCH resource to the receiving end through SCI of the PSCCH resource.

In some possible embodiments of the present disclosure, the processor is further configured to execute the program, so as to indicate position information about the feedback resource associated with the service resource and/or indicating whether the selected service resource is associated with the feedback resource through a first target field message in the SCI. The first target field message includes at least one of a destination ID, a destination group ID, a source node ID, a link ID and a predetermined field message.

In some possible embodiments of the present disclosure, the processor is further configured to execute the program, so as to determine a codeword, a sequence and/or an offset value used by the receiving end for feedback in a connection establishment procedure with the receiving end or in accordance with a second target field message in SCI. The second target field message includes at least one of a destination ID, a destination group ID, a source node ID, a link ID and an offset indication field.

In some possible embodiments of the present disclosure, the processor is further configured to execute the program, so as to: perform relevant detection on the determined codeword and/or sequence at a position corresponding to each feedback resource to acquire a feedback result from the receiving end; and determine whether to perform retransmission in accordance with the feedback result.

In some possible embodiments of the present disclosure, when the service resources are associated with the feedback resources, the feedback resources are associated with the service resources in a time domain and/or a frequency domain.

In some possible embodiments of the present disclosure, when the feedback resources are associated with the service resources in the time domain, the feedback resources are mapped to the service resources respectively in the time domain, each feedback resource is spaced apart from the corresponding service resource in the time domain by N time units, each time unit includes an OFDM symbol, a TTI and a transmission subframe, and N is a positive integer; or each resource pool is associated with a time interval corresponding to the feedback resource, and the resource pool includes the PSSCH resource and the PSCCH resource; or each carrier is associated with a fixed time interval between the feedback resource and the service resource; or each service is associated with a fixed time interval between the feedback resource and the service resource, and the service includes a QoS related parameter and/or a PPPP.

In some possible embodiments of the present disclosure, when the feedback resources are associated with the service resources in the frequency domain, each feedback resource has a same frequency-domain start point and a same frequency domain size as the corresponding service resource; or the frequency domain start point of each feedback resource is an M^{th} resource unit of the corresponding service resource, the frequency domain size is a fixed numerical unit, and M is a positive integer; or the feedback resources are associated with carriers and/or a root resource pool. The resource unit is an RE, a PRB or a sub-channel.

In some possible embodiments of the present disclosure, the processor is further configured to execute the program, so as to: determine a target time interval corresponding to each feedback resource used by the receiving end in accordance with a service delay and a capability of the receiving end for receiving, processing and transmitting a feedback; and select a target resource pool corresponding to the target time interval in accordance with an association relationship between the resource pool and the time interval corresponding to each feedback resource, and select the service resource from the selected target resource pool.

In still yet another aspect, the present disclosure provides in some embodiments a computer-readable storage medium storing therein a computer program. The computer program is executed by a processor so as to implement the steps of the above-mentioned resource indication method for the transmitting end.

In still yet another aspect, the present disclosure provides in some embodiments a communication device, which is a receiving end and includes a transceiver, a memory, a processor, and a program stored in the memory and executed by the processor. The processor is configured to execute the program, so as to acquire feedback resources used by the receiving end in unicasting and/or multicasting transmission and indicated by a transmitting end, the feedback resources at least including an HARQ ACK feedback resource or an HARQ NACK feedback resource for the receiving end.

In some possible embodiments of the present disclosure, the processor is further configured to execute the program, so as to: acquire a PSSCH resource indicated by the transmitting end through SCI in a PSCCH resource, selected service resources being associated with the feedback resources and including the PSSCH resource or the PSCCH resource; and determine the feedback resources in accordance with a preconfigured association relationship between the service resources and the feedback resources as well as the service resources.

In some possible embodiments of the present disclosure, the processor is further configured to execute the program, so as to: determine the feedback resources in accordance with the preconfigured association relationship between the service resources and the feedback resources, position information about each feedback resource associated with the corresponding service resource and indicated by the transmitting end, and the service resources; or determine whether the service resource is associated with the corresponding feedback resource in accordance with a first target field message in the SCI, and in the case that the service resource is associated with the corresponding feedback resource, determine the feedback resources in accordance with the preconfigured association relationship between the service resources and the feedback resources as well as the service resources. The first target field message includes at least one of a destination ID, a destination group ID, a source node ID, a link ID and a predetermined field message.

In some possible embodiments of the present disclosure, the processor is further configured to execute the program, so as to determine a codeword, a sequence and/or an offset value used by the receiving end for feedback in a connection establishment procedure with the receiving end or in accordance with a second target field message in SCI. The second target field message includes at least one of a destination ID, a group ID, a source node ID, a link ID and an offset indication field.

In some possible embodiments of the present disclosure, the processor is further configured to execute the program, so as to transmit a feedback result on the feedback resources using the codeword, the sequence and/or the offset value.

In some possible embodiments of the present disclosure, when the service resources are associated with the feedback resources, the feedback resources are associated with the service resources in a time domain and/or a frequency domain.

In some possible embodiments of the present disclosure, when the feedback resources are associated with the service resources in the time domain, the feedback resources are mapped to the service resources respectively in the time domain, each feedback resource is spaced apart from the corresponding service resource in the time domain by N time units, each time unit includes an OFDM symbol, a TTI and a transmission subframe, and N is a positive integer; or each resource pool is associated with a time interval corresponding to the feedback resource, and the resource pool includes the PSSCH resource and the PSCCH resource; or each carrier is associated with a fixed time interval between the feedback resource and the service resource; or each service is associated with a fixed time interval between the feedback resource and the service resource, and the service includes a QoS related parameter and/or a PPPP.

In some possible embodiments of the present disclosure, when the feedback resources are associated with the service resources in the frequency domain, each feedback resource has a same frequency-domain start point and a same frequency domain size as the corresponding service resource; or the frequency domain start point of each feedback resource is an M^{th} resource unit of the corresponding service resource, the frequency domain size is a fixed numerical unit, and M is a positive integer; or the feedback resources are associated with carriers and/or a root resource pool. The resource unit is an RE, a PRB or a sub-channel.

In some possible embodiments of the present disclosure, the processor is further configured to execute the program, so as to: determine a target resource pool corresponding to the service resources; determine a target time interval associated with the target resource pool in accordance with a preconfigured association relationship between pool resources and time intervals corresponding to the feedback resources; and determine the feedback resources corresponding to the target time interval.

In still yet another aspect, the present disclosure provides in some embodiments a computer-readable storage medium storing therein a computer program. The computer program is executed by a processor so as to implement the steps of the above-mentioned resource indication method for the receiving end.

In still yet another aspect, the present disclosure provides in some embodiments a communication device, which is a transmitting end and includes a first indication module configured to indicate feedback resources used by a receiving end in unicasting and/or multicasting transmission to the receiving end, the feedback resources at least including an HARQ ACK feedback resource or an HARQ NACK feedback resource for the receiving end.

In still yet another aspect, the present disclosure provides in some embodiments a communication device, which is a receiving end and includes a first acquisition module configured to acquire feedback resources used by the receiving end in unicasting and/or multicasting transmission and indicated by a transmitting end, the feedback resources at least including an HARQ ACK feedback resource or an HARQ NACK feedback resource for the receiving end.

The present disclosure has the following beneficial effect. According to the embodiments of the present disclosure, the feedback resources used by the receiving end in the unicasting and/or multicasting transmission may be indicated to the receiving end, so that the receiving end may feed back corresponding information on the feedback resources. As a result, it is able to solve the problem that there is currently no related scheme about the definition and indication of the feedback resources between the UEs in the unicasting and multicasting transmission.

### BRIEF DESCRIPTION OF THE DRAWINGS

FIG. 1 is a flow chart of a resource indication method according to one embodiment of the present disclosure;
FIG. 2 is another flow chart of the resource indication method according to one embodiment of the present disclosure;
FIG. 3 is a block diagram of a communication device according to one embodiment of the present disclosure;
FIG. 4 is a block diagram of a communication device according to one embodiment of the present disclosure; and
FIG. 5 is another block diagram of the communication device according to one embodiment of the present disclosure.

### DETAILED DESCRIPTION

In order to make the objects, the technical solutions and the advantages of the present disclosure more apparent, the present disclosure will be described hereinafter in a clear and complete manner in conjunction with the drawings and embodiments.

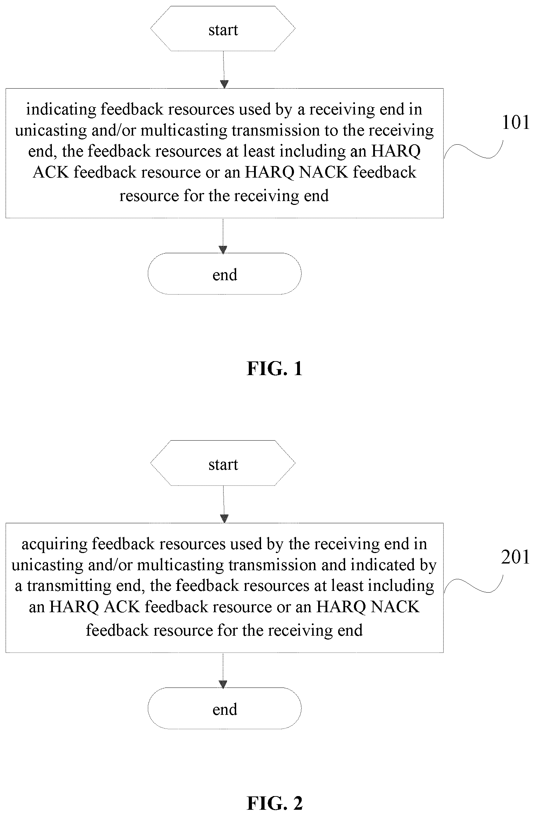

The present disclosure provides in some embodiments a resource indication method for a transmitting end which, as shown in FIG. 1, includes Step 101 of indicating feedback resources used by a receiving end in unicasting and/or multicasting transmission to the receiving end, the feedback resources at least including an HARQ ACK feedback resource or an HARQ NACK feedback resource for the receiving end.

The feedback resources may be specifically feedback physical channels. Configuration of the feedback resources may be determined by a source UE or a base station. To be specific, it may be determined by the base station in a unicasting mode 1, and by the source UE in a unicasting mode 2; and it may be determined by the base station, or by the base station and a cluster configuration jointly in a multicasting mode 1, and determined by the source UE and the cluster configuration jointly in a multicasting mode 2.

In some embodiments of the present disclosure, the feedback resources may be dynamically indicated to the receiving end, e.g., the specific feedback resources may be indicated in SCI; or the feedback resources may be indicated through indicating service sources associated with the feedback resources, and the service resources may include a PSSCH resource or a PSCCH resource.

According to the embodiments of the present disclosure, the feedback resources used by the receiving end in the unicasting and/or multicasting transmission may be indicated to the receiving end, so that the receiving end may feed back corresponding information on the feedback resources. As a result, it is able to solve the problem that there is currently no related scheme about the definition and indication of the feedback resources between the UEs in the unicasting and multicasting transmission.

In some possible embodiments of the present disclosure, Step 101 may include: selecting a PSSCH resource and a PSCCH resource, selected service resources being associated with the feedback resources and including the PSSCH resource or the PSCCH resource; and indicating the selected PSSCH resource to the receiving end through SCI of the PSCCH resource.

In some embodiments of the present disclosure, the association relationship between the service resources and the feedback resources may be preconfigured by a system or configured by the base station. When the service resources are associated with the feedback resources, the feedback resources may be associated with the service resources in a time domain and/or a frequency domain.

When the feedback resources are associated with the service resources in the time domain, the feedback resources may be mapped to the service resources respectively in the time domain, each feedback resource is spaced apart from the corresponding service resource in the time domain by N time units, each time unit includes an OFDM symbol, a TTI and a transmission subframe, and N is a positive integer.

Here, a mapping between the feedback resources and the service resources in the time domain may be configured statically, and a constant value, in a basic unit of second, or the quantity of symbols or TTIs, may be set through a protocol.

Alternatively, each resource pool may be associated with a time interval corresponding to the feedback resource, and the resource pool may include the PSSCH resource and the PSCCH resource.

Here, the mapping between the feedback resources and the service resources in the time domain may be configured semi-statically. It may be configured through a protocol, and one configuration mode may be provided for each kind of resources. For example, each resource pool may be associated with a feedback time corresponding to the feedback resource through a System Information Block (SIB), or a Radio Resource Control (RRC) reconfiguration or preconfiguration message. This configuration relationship may be unique to each resource pool. A basic unit may be the same as that in the static configuration. When selecting the resource pool, a UE may refer to a processing capability of a target UE and/or a delay requirement on a service for the source UE. The processing capability of the target UE may be an upper limit of the feedback time, and a feedback time of the target UE has been interacted between the UEs in a connection establishment procedure. For example, when the target UE has a relatively low processing capability and it is impossible for the target UE to decode and give a feedback within lms, the source UE may select a longer feedback time. If without any interaction, the source UE may select the feedback time in accordance with a minimum requirement prescribed in the system, i.e., a maximum processing time. In addition, the delay requirement on the service for the source UE, e.g., Ims or 2ms, needs to be taken into consideration.

Alternatively, each carrier may be associated with a fixed time interval between the feedback resource and the service resource.

Alternatively, each service may be associated with a fixed time interval between the feedback resource and the service resource, and the service may include a QoS related parameter and/or a PPPP.

In addition, with respect to the above-mentioned dynamic indication mode, there may exist no mapping between the service resources and the feedback resources, and some possible values of a gap may be configured in advance, or the values of the gap will not be particularly defined. In the former, it may be configured through an RRC message, e.g., 1 ms, 2 ms, 4 ms, 5 ms or subframe(s). It may be dynamically indicated in the SCI, so as to correspond to a corresponding value.

When the feedback resources are associated with the service resources in the frequency domain, each feedback resource may have a same frequency-domain start point and a same frequency domain size as the corresponding service resource; or the frequency domain start point of each feedback resource may be an M^{th} resource unit of the corresponding service resource, the frequency domain size may be a fixed numerical unit, and M is a positive integer; or the feedback resources may be associated with carriers and/or a root resource pool. The resource unit may be an RE, a PRB or a sub-channel.

Here, the feedback resource may be not completely in a same frequency domain as a PSSCH, but there may exist a specific mapping therebetween. A fixed value or fixed values, e.g., a fixed start position and a fixed size, may be set. For example, the feedback resources may be determined as being at a first RE or a plurality of consecutive REs of a sub-band resource, with a fixed interval. Especially for multicasting, there may exist the mapping between the feedback resource and the PSSCH, i.e., when the feedback resource is completely in a same frequency domain as the PSSCH, the feedback resource may be associated with a size of the PSSCH, but actually it may be associated with the quantity of elements in a group.

In addition, with respect to the above-mentioned dynamic indication mode, there may exist no mapping between the service resources and the feedback resources, an offset relationship between the feedback resources and the service resources, similar to an offset in the time domain, needs to be indicated, and a time-domain and frequency-domain offset joint encoding mode may be adopted.

In some embodiments of the present disclosure, the resource indication method may further include indicating position information about the feedback resource associated with the service resource and/or indicating whether the selected service resource is associated with the feedback resource through a first target field message in the SCI. The first target field message may include at least one of a destination ID, a destination group ID, a source node ID, a link ID and a predetermined field message.

In some embodiments of the present disclosure, for the static configuration mode, the transmitting end may merely indicate the selected service resource, and indicate whether the selected service resource is associated with the feedback resource through the first target field message in the SCI. For the semi-static configuration mode, apart from the selected service resource, the transmitting end also needs to indicate the position information about the feedback resource associated with the service resource, and the position information may include time-domain information and frequency-domain information.

For example, for the static configuration mode, one bit may be added in the SCI to indicate whether there is the feedback resource. Based on this, a receiving node may determine whether there is the feedback resource. For the receiving node, it needs to perform exclusion on the feedback resources or perform resource retransmission. When the receiving node determines that it is an active receiving node, it needs to give a feedback.

Alternatively, for the static configuration mode, no indication may be given in the SCI, and the node may indicate, in any other way, whether there is the feedback resource, e.g., through physical information, such as the destination ID or destination group ID. There may exist a one-to-one mapping between the destination IDs/destination group IDs and transmission modes (unicasting, multicasting and broadcasting) at a physical layer.

Alternatively, for the static configuration mode, no indication may be given in the SCI, and the node may indicate, in any other way, whether there is the feedback resource, e.g., through physical information, such as an L2 destination ID (a service ID) at a high layer. There may exist a one-to-one mapping between the service IDs and the transmission modes (unicasting, multicasting and broadcasting) at the high layer.

Alternatively, for the static configuration mode, one bit may be added in the SCI to indicate a scheduling mode. For example, for Semi-Persistent Scheduling (SPS), a feedback needs to be given merely after a last transmission resource has been received. Alternatively, as directly prescribed, the feedback may be given with respect to all resources in the SCI or merely to a last resource in the SCI.

Prior to indicating the feedback resources used by the receiving end in the unicasting and/or multicasting transmission to the receiving end, the resource indication method may further include: determining a codeword, a sequence and/or an offset value used by the receiving end for feedback in a connection establishment procedure with the receiving end or in accordance with a second target field message in SCI. The second target field message may include at least one of a destination ID, a destination group ID, a source node ID, a link ID and an offset indication field.

In some embodiments of the present disclosure, the codeword, the sequence and/or the offset value used by the receiving end for feedback may be determined in the connection establishment procedure with the receiving end, or determined in accordance with the second target field message in the SCI.

The codeword and/or sequence may be in the following forms: a unique ID of a connection communication link; for the unicasting, one session, or a source ID+ a destination ID; and for the multicasting, a destination group ID.

Subsequent to indicating the feedback resources used by the receiving end in the unicasting and/or multicasting transmission to the receiving end, the resource indication method may further include: performing relevant detection on the determined codeword and/or sequence at a position corresponding to each feedback resource to acquire a feedback result from the receiving end; and determining whether to perform retransmission in accordance with the feedback result.

In some embodiments of the present disclosure, the transmitting end may detect the determined sequence on the determined resource to prevent the blind detection, and then determine whether to perform the retransmission in accordance with the feedback result.

Further, the selecting the PSSCH resource and the PSCCH resource may include: determining a target time interval corresponding to each feedback resource used by the receiving end in accordance with a service delay and a capability of the receiving end for receiving, processing and transmitting a feedback; and selecting a target resource pool corresponding to the target time interval in accordance with an association relationship between the resource pool and the time interval corresponding to each feedback resource, and selecting the service resource from the selected target resource pool.

According to the resource indication method in the embodiments of the present disclosure, the feedback resources used by the receiving end in the unicasting and/or multicasting transmission may be indicated to the receiving end, so that the receiving end may feed back corresponding information on the feedback resources. As a result, it is able to solve the problem that there is currently no related scheme about the definition and indication of the feedback resources between the UEs in the unicasting and multicasting transmission.

The present disclosure further provides in some embodiments a resource indication method for a receiving end which, as shown in FIG. 2, includes Step 201 of acquiring feedback resources used by the receiving end in unicasting and/or multicasting transmission and indicated by a transmitting end. The feedback resources at least include an HARQ ACK feedback resource or an HARQ NACK feedback resource for the receiving end.

The feedback resources may be specifically feedback physical channels. Configuration of the feedback resources may be determined by a source UE or a base station. To be specific, it may be determined by the base station in a unicasting mode 1, and by the source UE in a unicasting mode 2; and it may be determined by the base station, or by the base station and a cluster configuration jointly in a multicasting mode 1, and determined by the source UE and the cluster configuration jointly in a multicasting mode 2.

To be specific, the acquiring the feedback resources used by the receiving end in the unicasting and/or multicasting transmission and indicated by the transmitting end may include: acquiring a PSSCH resource indicated by the transmitting end through SCI in a PSCCH resource, selected service resources being associated with the feedback resources and including the PSSCH resource or the PSCCH resource; and determining the feedback resources in accordance with a preconfigured association relationship between the service resources and the feedback resources as well as the service resources.

Further, the determining the feedback resources in accordance with the preconfigured association relationship between the service resources and the feedback resources as well as the service resources may include: determining the feedback resources in accordance with the preconfigured association relationship between the service resources and the feedback resources, position information about each feedback resource associated with the corresponding service resource and indicated by the transmitting end, and the service resources; or determining whether the service resource is associated with the corresponding feedback resource in accordance with a first target field message in the SCI, and in the case that the service resource is associated with the corresponding feedback resource, determining the feedback resources in accordance with the preconfigured association relationship between the service resources and the feedback resources as well as the service resources. The first target field message may include at least one of a destination ID, a destination group ID, a source node ID, a link ID and a predetermined field message.

Prior to acquiring the feedback resources used by the receiving end in the unicasting and/or multicasting transmission and indicated by the transmitting end, the resource indication method may further include determining a codeword, a sequence and/or an offset value used by the receiving end for feedback in a connection establishment procedure with the receiving end or in accordance with a second target field message in SCI. The second target field message includes at least one of a destination ID, a group ID, a source node ID, a link ID and an offset indication field.

Subsequent to acquiring the feedback resources used by the receiving end in the unicasting and/or multicasting transmission and indicated by the transmitting end, the resource indication method may further include transmitting a feedback result on the feedback resources using the codeword, the sequence and/or the offset value. The feedback result may include an HARQ ACK or NACK message.

Further, when the service resources are associated with the feedback resources, the feedback resources may be associated with the service resources in a time domain and/or a frequency domain.

When the feedback resources are associated with the service resources in the time domain, the feedback resources may be mapped to the service resources respectively in the time domain, each feedback resource may be spaced apart from the corresponding service resource in the time domain by N time units, each time unit may include an OFDM symbol, a TTI and a transmission sub frame, and N is a positive integer; or each resource pool may be associated with a time interval corresponding to the feedback resource, and the resource pool may include the PSSCH resource and the PSCCH resource; or each carrier may be associated with a fixed time interval between the feedback resource and the service resource; or each service may be associated with a fixed time interval between the feedback resource and the service resource, and the service may include a QoS related parameter and/or a PPPP.

When the feedback resources are associated with the service resources in the frequency domain, each feedback resource may have a same frequency-domain start point and a same frequency domain size as the corresponding service resource; or the frequency domain start point of each feedback resource may be an M^{th} resource unit of the corresponding service resource, the frequency domain size may be a fixed numerical unit, and M is a positive integer; or the feedback resources may be associated with carriers and/or a root resource pool. The resource unit may be an RE, a PRB or a sub-channel.

Further, the determining the feedback resources in accordance with the preconfigured association relationship between the service resources and the feedback resources as well as the service resources may include: determining a target resource pool corresponding to the service resources; determining a target time interval associated with the target resource pool in accordance with a preconfigured association relationship between pool resources and time intervals corresponding to the feedback resources; and determining the feedback resources corresponding to the target time interval.

According to the resource indication method in the embodiments of the present disclosure, the feedback resources used by the receiving end in the unicasting and/or multicasting transmission and indicated by the transmitting end may be acquired, and the feedback resources may at least include the HARQ ACK or NACK feedback resource for the receiving end, so that the receiving end may feed back corresponding information on the feedback resources. As a result, it is able to solve the problem that there is currently no related scheme about the definition and indication of the feedback resources between the UEs in the unicasting and multicasting transmission.

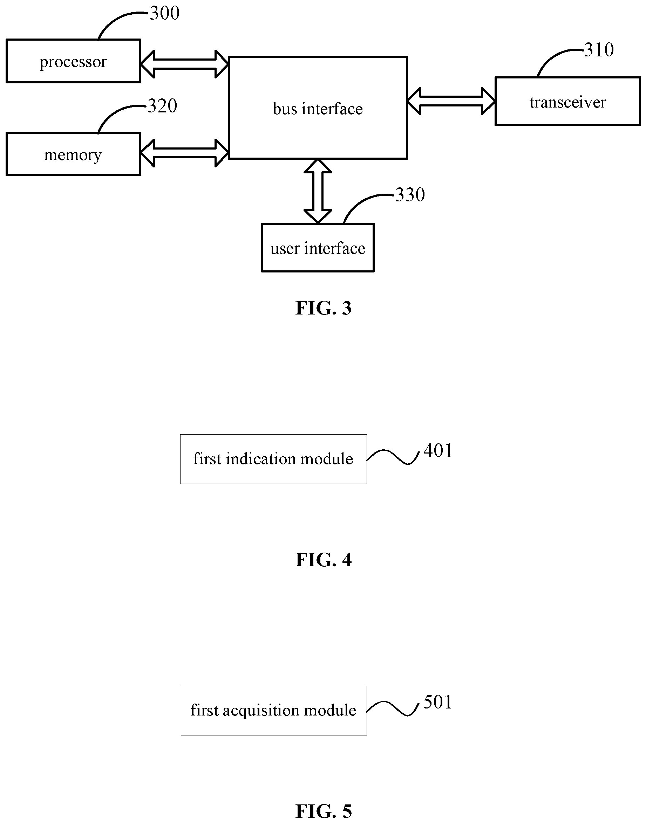

As shown in FIG. 3, the present disclosure further provides in some embodiments a communication device which is a transmitting end. To be specific, the communication device may be a UE, and include a transceiver, a memory, a processor, and a computer program stored in the memory and executed by the processor. The processor is configured to execute the computer program, so as to indicate feedback resources used by a receiving end in unicasting and/or multicasting transmission to the receiving end, the feedback resources at least including an HARQ ACK feedback resource or an HARQ NACK feedback resource for the receiving end.

In FIG. 3, bus architecture may include a number of buses and bridges connected to each other, so as to connect various circuits for one or more processors 300 and one or more memories 320. In addition, as is known in the art, the bus architecture may be used to connect any other circuits, such as a circuit for a peripheral device, a circuit for a voltage stabilizer and a power management circuit. A bus interface may be provided, and the transceiver 310 may consist of a plurality of elements, i.e., a transmitter and a receiver for communication with any other devices over a transmission medium. With respect to different UEs, a user interface 330 may also be provided for devices which are to be arranged inside or outside the UE, and these devices may include but not limited to a keypad, a display, a speaker, a microphone and a joystick.

The processor 300 may take charge of managing the bus architecture as well as general processings. The memory 320 may store therein data for the operation of the processor 300.

In some possible embodiments of the present disclosure, the processor 300 is further configured to read the program in the memory 320, so as to: select a PSSCH resource and a PSCCH resource, selected service resources being associated with the feedback resources and including the PSSCH resource or the PSCCH resource; and indicate the selected PSSCH resource to the receiving end through SCI of the PSCCH resource.

In some possible embodiments of the present disclosure, the processor 300 is further configured to read the program in the memory 320, so as to indicate position information about the feedback resource associated with the service resource and/or indicating whether the selected service resource is associated with the feedback resource through a first target field message in the SCI. The first target field message may include at least one of a destination ID, a destination group ID, a source node ID, a link ID and a predetermined field message.

In some possible embodiments of the present disclosure, the processor 300 is further configured to read the program in the memory 320, so as to determine a codeword, a sequence and/or an offset value used by the receiving end for feedback in a connection establishment procedure with the receiving end or in accordance with a second target field message in SCI. The second target field message may include at least one of a destination ID, a destination group ID, a source node ID, a link ID and an offset indication field.

In some possible embodiments of the present disclosure, the processor 300 is further configured to read the program in the memory 320, so as to: perform relevant detection on the determined codeword and/or sequence at a position corresponding to each feedback resource to acquire a feedback result from the receiving end; and determine whether to perform retransmission in accordance with the feedback result.

In some possible embodiments of the present disclosure, when the service resources are associated with the feedback resources, the feedback resources may be associated with the service resources in a time domain and/or a frequency domain.

In some possible embodiments of the present disclosure, when the feedback resources are associated with the service resources in the time domain, the feedback resources may be mapped to the service resources respectively in the time domain, each feedback resource may be spaced apart from the corresponding service resource in the time domain by N time units, each time unit may include an OFDM symbol, a TTI and a transmission subframe, and N is a positive integer; or each resource pool may be associated with a time interval corresponding to the feedback resource, and the resource pool may include the PSSCH resource and the PSCCH resource; or each carrier may be associated with a fixed time interval between the feedback resource and the service resource; or each service may be associated with a fixed time interval between the feedback resource and the service resource, and the service may include a QoS related parameter and/or a PPPP.

In some possible embodiments of the present disclosure, when the feedback resources are associated with the service resources in the frequency domain, each feedback resource may have a same frequency-domain start point and a same frequency domain size as the corresponding service resource; or the frequency domain start point of each feedback resource may be an M^{th} resource unit of the corresponding service resource, the frequency domain size may be a fixed numerical unit, and M is a positive integer; or the feedback resources may be associated with carriers and/or a root resource pool. The resource unit may be an RE, a PRB or a sub-channel.

In some possible embodiments of the present disclosure, the processor 300 is further configured to read the program in the memory 320, so as to: determine a target time interval corresponding to each feedback resource used by the receiving end in accordance with a service delay and a capability of the receiving end for receiving, processing and transmitting a feedback; and select a target resource pool corresponding to the target time interval in accordance with an association relationship between the resource pool and the time interval corresponding to each feedback resource, and select the service resource from the selected target resource pool.

According to the embodiments of the present disclosure, the feedback resources used by the receiving end in the unicasting and/or multicasting transmission may be indicated to the receiving end, so that the receiving end may feed back corresponding information on the feedback resources. As a result, it is able to solve the problem that there is currently no related scheme about the definition and indication of the feedback resources between the UEs in the unicasting and multicasting transmission.

The present disclosure further provides in some embodiments a computer-readable storage medium storing therein a computer program. The computer program is executed by a processor, so as to indicate feedback resources used by a receiving end in unicasting and/or multicasting transmission to the receiving end, the feedback resources at least including an HARQ ACK feedback resource or an HARQ NACK feedback resource for the receiving end.

The program may be executed by the processor to implement all the implementation modes in the above-mentioned method embodiments for the transmitting end, which will not be particularly defined herein.

As shown in FIG. 4, the present disclosure further provides in some embodiments a communication device which is a transmitting end and includes a first indication module 401 configured to indicate feedback resources used by a receiving end in unicasting and/or multicasting transmission to the receiving end, the feedback resources at least including an HARQ ACK feedback resource or an HARQ NACK feedback resource for the receiving end.

In some embodiments of the present disclosure, the first indication module 401 may include: a selection sub-module configured to select a PSSCH resource and a PSCCH resource, selected service resources being associated with the feedback resources and including the PSSCH resource or the PSCCH resource; and an indication sub-module configured to indicate the selected PSSCH resource to the receiving end through SCI of the PSCCH resource.

In some embodiments of the present disclosure, the communication device may further include a second indication module configured to, subsequent to selecting the PSSCH resource and the PSCCH resource, indicate position information about the feedback resource associated with the service resource and/or indicating whether the selected service resource is associated with the feedback resource through a first target field message in the SCI. The first target field message may include at least one of a destination ID, a destination group ID, a source node ID, a link ID and a predetermined field message.

In some embodiments of the present disclosure, the communication device may further include a first determination module configured to, prior to indicating the feedback resources used by the receiving end in the unicasting and/or multicasting transmission to the receiving end, determine a codeword, a sequence and/or an offset value used by the receiving end for feedback in a connection establishment procedure with the receiving end or in accordance with a second target field message in SCI. The second target field message may include at least one of a destination ID, a destination group ID, a source node ID, a link ID and an offset indication field.

In some embodiments of the present disclosure, the communication device may further include: a second acquisition module configured to, subsequent to indicating the feedback resources used by the receiving end in the unicasting and/or multicasting transmission to the receiving end, perform relevant detection on the determined codeword and/or sequence at a position corresponding to each feedback resource to acquire a feedback result from the receiving end; and a second determination module configured to determine whether to perform retransmission in accordance with the feedback result.

In some embodiments of the present disclosure, when the service resources are associated with the feedback resources, the feedback resources may be associated with the service resources in a time domain and/or a frequency domain.

In some embodiments of the present disclosure, when the feedback resources are associated with the service resources in the time domain, the feedback resources may be mapped to the service resources respectively in the time domain, each feedback resource may be spaced apart from the corresponding service resource in the time domain by N time units, each time unit may include an OFDM symbol, a TTI and a transmission subframe, and N is a positive integer; or each resource pool may be associated with a time interval corresponding to the feedback resource, and the resource pool may include the PSSCH resource and the PSCCH resource; or each carrier may be associated with a fixed time interval between the feedback resource and the service resource; or each service may be associated with a fixed time interval between the feedback resource and the service resource, and the service may include a QoS related parameter and/or a PPPP.

In some embodiments of the present disclosure, when the feedback resources are associated with the service resources in the frequency domain, each feedback resource may have a same frequency-domain start point and a same frequency domain size as the corresponding service resource; or the frequency domain start point of each feedback resource may be an M^{th} resource unit of the corresponding service resource, the frequency domain size may be a fixed numerical unit, and M is a positive integer; or the feedback resources may be associated with carriers and/or a root resource pool. The resource unit may be an RE, a PRB or a sub-channel.

In some embodiments of the present disclosure, the selection sub-module may include: a first determination unit configured to determine a target time interval corresponding to each feedback resource used by the receiving end in accordance with a service delay and a capability of the receiving end for receiving, processing and transmitting a feedback; and a selection unit configured to select a target resource pool corresponding to the target time interval in accordance with an association relationship between the resource pool and the time interval corresponding to each feedback resource, and select the service resource from the selected target resource pool.

According to the communication device in the embodiments of the present disclosure, the feedback resources used by the receiving end in the unicasting and/or multicasting transmission may be indicated to the receiving end, so that the receiving end may feed back corresponding information on the feedback resources. As a result, it is able to solve the problem that there is currently no related scheme about the definition and indication of the feedback resources between the UEs in the unicasting and multicasting transmission.

The present disclosure further provides in some embodiments a communication device which is a receiving end. To be specific, the communication device may be a UE, and include a transceiver, a memory, a processor, and a program stored in the memory and executed by the processor. A block diagram of the receiving end may be the same as that in FIG. 3. The processor is configured to execute the program, so as to acquire feedback resources used by the receiving end in unicasting and/or multicasting transmission and indicated by a transmitting end, the feedback resources at least including an HARQ ACK feedback resource or an HARQ NACK feedback resource for the receiving end.

In some possible embodiments of the present disclosure, the processor is further configured to execute the program, so as to: acquire a PSSCH resource indicated by the transmitting end through SCI in a PSCCH resource, selected service resources being associated with the feedback resources and including the PSSCH resource or the PSCCH resource; and determine the feedback resources in accordance with a preconfigured association relationship between the service resources and the feedback resources as well as the service resources.

In some possible embodiments of the present disclosure, the processor is further configured to execute the program, so as to: determine the feedback resources in accordance with the preconfigured association relationship between the service resources and the feedback resources, position information about each feedback resource associated with the corresponding service resource and indicated by the transmitting end, and the service resources; or determine whether the service resource is associated with the corresponding feedback resource in accordance with a first target field message in the SCI, and in the case that the service resource is associated with the corresponding feedback resource, determine the feedback resources in accordance with the preconfigured association relationship between the service resources and the feedback resources as well as the service resources. The first target field message may include at least one of a destination ID, a destination group ID, a source node ID, a link ID and a predetermined field message.

In some possible embodiments of the present disclosure, the processor is further configured to execute the program, so as to determine a codeword, a sequence and/or an offset value used by the receiving end for feedback in a connection establishment procedure with the receiving end or in accordance with a second target field message in SCI. The second target field message may include at least one of a destination ID, a group ID, a source node ID, a link ID and an offset indication field.

In some possible embodiments of the present disclosure, the processor is further configured to execute the program, so as to transmit a feedback result on the feedback resources using the codeword, the sequence and/or the offset value.

In some possible embodiments of the present disclosure, when the service resources are associated with the feedback resources, the feedback resources may be associated with the service resources in a time domain and/or a frequency domain.

In some possible embodiments of the present disclosure, when the feedback resources are associated with the service resources in the time domain, the feedback resources may be mapped to the service resources respectively in the time domain, each feedback resource may be spaced apart from the corresponding service resource in the time domain by N time units, each time unit may include an OFDM symbol, a TTI and a transmission subframe, and N is a positive integer; or each resource pool may be associated with a time interval corresponding to the feedback resource, and the resource pool may include the PSSCH resource and the PSCCH resource; or each carrier may be associated with a fixed time interval between the feedback resource and the service resource; or each service may be associated with a fixed time interval between the feedback resource and the service resource, and the service may include a QoS related parameter and/or a PPPP.

In some possible embodiments of the present disclosure, when the feedback resources are associated with the service resources in the frequency domain, each feedback resource may have a same frequency-domain start point and a same frequency domain size as the corresponding service resource; or the frequency domain start point of each feedback resource may be an M^{th} resource unit of the corresponding service resource, the frequency domain size may be a fixed numerical unit, and M is a positive integer; or the feedback resources may be associated with carriers and/or a root resource pool. The resource unit may be an RE, a PRB or a sub-channel.

In some possible embodiments of the present disclosure, the processor is further configured to execute the program, so as to: determine a target resource pool corresponding to the service resources; determine a target time interval associated with the target resource pool in accordance with a preconfigured association relationship between pool resources and time intervals corresponding to the feedback resources; and determine the feedback resources corresponding to the target time interval.

According to the communication device in the embodiments of the present disclosure, the feedback resources used by the receiving end in the unicasting and/or multicasting transmission and indicated by the transmitting end may be acquired, and the feedback resources may at least include the HARQ ACK or NACK feedback resource for the receiving end, so that the receiving end may feed back corresponding information on the feedback resources. As a result, it is able to solve the problem that there is currently no related scheme about the definition and indication of the feedback resources between the UEs in the unicasting and multicasting transmission.

The present disclosure further provides in some embodiments a computer-readable storage medium storing therein a computer program. The computer program is executed by a processor, so as to acquire feedback resources used by the receiving end in unicasting and/or multicasting transmission and indicated by a transmitting end, the feedback resources at least including an HARQ ACK feedback resource or an HARQ NACK feedback resource for the receiving end.

The computer program may be executed by the processor so as to implement all implementation modes in the above method embodiments for the receiving end, which will not be particularly defined herein.

As shown in FIG. 5, the present disclosure further provides in some embodiments a communication device which is a receiving end and includes a first acquisition module 501 configured to acquire feedback resources used by the receiving end in unicasting and/or multicasting transmission and indicated by a transmitting end, the feedback resources at least including an HARQ ACK feedback resource or an HARQ NACK feedback resource for the receiving end.

In some embodiments of the present disclosure, the first acquisition module may include: a first acquisition sub-module configured to acquire a PSSCH resource indicated by the transmitting end through SCI in a PSCCH resource, selected service resources being associated with the feedback resources and including the PSSCH resource or the PSCCH resource; and a determination sub-module configured to determine the feedback resources in accordance with a preconfigured association relationship between the service resources and the feedback resources as well as the service resources.

The determination sub-module is further configured to: determine the feedback resources in accordance with the preconfigured association relationship between the service resources and the feedback resources, position information about each feedback resource associated with the corresponding service resource and indicated by the transmitting end, and the service resources; or determine whether the service resource is associated with the corresponding feedback resource in accordance with a first target field message in the SCI, and in the case that the service resource is associated with the corresponding feedback resource, determine the feedback resources in accordance with the preconfigured association relationship between the service resources and the feedback resources as well as the service resources. The first target field message may include at least one of a destination ID, a destination group ID, a source node ID, a link ID and a predetermined field message.

In some embodiments of the present disclosure, the communication device may further include a third determination module configured to, prior to acquiring the feedback resources used by the receiving end in the unicasting and/or multicasting transmission and indicated by the transmitting end, determine a codeword, a sequence and/or an offset value used by the receiving end for feedback in a connection establishment procedure with the receiving end or in accordance with a second target field message in SCI. The second target field message may include at least one of a destination ID, a group ID, a source node ID, a link ID and an offset indication field.

In some embodiments of the present disclosure, the communication device may further include a feedback module configured to, subsequent to acquiring the feedback resources used by the receiving end in the unicasting and/or multicasting transmission and indicated by the transmitting end, transmit a feedback result on the feedback resources using the codeword, the sequence and/or the offset value.

In some embodiments of the present disclosure, when the service resources are associated with the feedback resources, the feedback resources may be associated with the service resources in a time domain and/or a frequency domain.

In some embodiments of the present disclosure, when the feedback resources are associated with the service resources in the time domain, the feedback resources may be mapped to the service resources respectively in the time domain, each feedback resource may be spaced apart from the corresponding service resource in the time domain by N time units, each time unit may include an OFDM symbol, a TTI and a transmission subframe, and N is a positive integer; or each resource pool may be associated with a time interval corresponding to the feedback resource, and the resource pool may include the PSSCH resource and the PSCCH resource; or each carrier may be associated with a fixed time interval between the feedback resource and the service resource; or each service may be associated with a fixed time interval between the feedback resource and the service resource, and the service may include a QoS related parameter and/or a PPPP.

In some embodiments of the present disclosure when the feedback resources are associated with the service resources in the frequency domain, each feedback resource may have a same frequency-domain start point and a same frequency domain size as the corresponding service resource; or the frequency domain start point of each feedback resource may be an M^{th} resource unit of the corresponding service resource, the frequency domain size may be a fixed numerical unit, and M is a positive integer; or the feedback resources may be associated with carriers and/or a root resource pool. The resource unit may be an RE, a PRB or a sub-channel.

In some embodiments of the present disclosure, the determination sub-module may include: a second determination unit configured to determine a target resource pool corresponding to the service resources; a third determination unit configured to determine a target time interval associated with the target resource pool in accordance with a preconfigured association relationship between pool resources and time intervals corresponding to the feedback resources; and a fourth determination unit configured to determine the feedback resources corresponding to the target time interval.

According to the communication device in the embodiments of the present disclosure, the feedback resources used by the receiving end in the unicasting and/or multicasting transmission and indicated by the transmitting end may be acquired, and the feedback resources may at least include the HARQ ACK or NACK feedback resource for the receiving end, so that the receiving end may feed back corresponding information on the feedback resources. As a result, it is able to solve the problem that there is currently no related scheme about the definition and indication of the feedback resources between the UEs in the unicasting and multicasting transmission.

It should be further appreciated that, serial numbers of the steps shall not be used to define the order of the steps, and instead, the order of the steps shall be determined in accordance with their functions and internal logics.

It should be appreciated that, units and steps described in the embodiments of the present disclosure may be implemented in the form of electronic hardware, or a combination of a computer program and the electronic hardware. Whether or not these functions are executed by hardware or software depends on specific applications or design constraints of the technical solution. Different methods may be adopted with respect to the specific applications so as to achieve the described functions, without departing from the scope of the present disclosure.

It should be further appreciated that, for convenience and clarification, operation procedures of the system, device and units described hereinabove may refer to the corresponding procedures in the method embodiment, and thus will not be particularly defined herein.

It should be further appreciated that, the device and method may be implemented in any other ways. For example, the embodiments for the apparatus are merely for illustrative purposes, and the modules or units are provided merely on the basis of their logic functions. During the actual application, some modules or units may be combined together or integrated into another system. Alternatively, some functions of the module or units may be omitted or not executed. In addition, the coupling connection, direct coupling connection or communication connection between the modules or units may be implemented via interfaces, and the indirect coupling connection or communication connection between the modules or units may be implemented in an electrical or mechanical form or in any other form.

The units may be, or may not be, physically separated from each other. The units for displaying may be, or may not be, physical units, i.e., they may be arranged at an identical position, or distributed on a plurality of network elements. Parts or all of the units may be selected in accordance with the practical need, so as to achieve the purpose of the present disclosure.

In addition, the functional units in the embodiments of the present disclosure may be integrated into a processing unit, or the functional units may exist independently, or two or more functional units may be combined together.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

It should be appreciated that, all or parts of the steps in the method may be implemented by related hardware under the control of a computer program. The computer program may be stored in a computer-readable storage medium, and it may be executed so as to implement the steps in the above-mentioned method embodiments. The storage medium may be a magnetic disk, an optical disk, an ROM or an RAM.

It should be appreciated that, the embodiments of the present disclosure may be implemented by hardware, software, firmware, middleware, microcode or a combination thereof. For the hardware implementation, the processor may include one or more of an Application Specific Integrated Circuits (ASIC), a Digital Signal Processing (DSP), a DSP device (DSPD), a Programmable Logic Device (PLD), a Field-Programmable Gate Array (FPGA), a general-purpose processor, a controller, a microcontroller, a microprocessor, any other electronic unit capable of achieving the functions in the present disclosure, or a combination thereof.

For the software implementation, the scheme in the embodiments of the present disclosure may be implemented through modules capable of achieving the functions in the present disclosure (e.g., processes or functions). Software codes may be stored in the memory and executed by the processor. The memory may be implemented inside or outside the processor.

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. A resource indication method for a transmitting end, comprising:
indicating feedback resources used by a receiving end in unicasting and/or multicasting transmission to the receiving end, the feedback resources at least comprising a Hybrid Automatic Repeat Request (HARQ) Acknowledgement (ACK) feedback resource or an HARQ Negative Acknowledgement (NACK) feedback resource for the receiving end.

2. The resource indication method according to claim 1, wherein the indicating the feedback resources used by the receiving end in the unicasting and/or multicasting transmission to the receiving end comprises:
selecting a Physical Sidelink Shared Channel (PSSCH) resource and a Physical Sidelink Control Channel (PSCCH) resource, selected service resources being associated with the feedback resources and comprising the PSSCH resource or the PSCCH resource; and
indicating the selected PSSCH resource to the receiving end through Scheduling Control Information (SCI) of the PSCCH resource.

3. The resource indication method according to claim 2, wherein subsequent to selecting the PSSCH resource and the PSCCH resource, the resource indication method further comprises:
indicating position information about the feedback resource associated with the service resource and/or indicating whether the selected service resource is associated with the feedback resource through a first target field message in the SCI, wherein the first target field message comprises at least one of a destination Identity (ID), a destination group ID, a source node ID, a link ID and a predetermined field message.

4. The resource indication method according to claim 1, wherein prior to indicating the feedback resources used by the receiving end in the unicasting and/or multicasting transmission to the receiving end, the resource indication method further comprises:
determining a codeword, a sequence and/or an offset value used by the receiving end for feedback in a connection establishment procedure with the receiving end or in accordance with a second target field message in SCI, wherein the second target field message comprises at least one of a destination ID, a destination group ID, a source node ID, a link ID and an offset indication field.

5. The resource indication method according to claim 4, wherein subsequent to indicating the feedback resources used by the receiving end in the unicasting and/or multicasting transmission to the receiving end, the resource indication method further comprises:
performing relevant detection on the determined codeword and/or sequence at a position corresponding to each feedback resource to acquire a feedback result from the receiving end; and
determining whether to perform retransmission in accordance with the feedback result.

6. The resource indication method according to claim 2, wherein when the service resources are associated with the feedback resources, the feedback resources are associated with the service resources in a time domain and/or a frequency domain.

7. The resource indication method according to claim 6, wherein when the feedback resources are associated with the service resources in the time domain, the feedback resources are mapped to the service resources respectively in the time domain, each feedback resource is spaced apart from the corresponding service resource in the time domain by N time units, each time unit comprises an Orthogonal Frequency Division Multiplexing (OFDM) symbol, a Transmission Time Interval (TTI) and a transmission subframe, and N is a positive integer; or
each resource pool is associated with a time interval corresponding to the feedback resource, and the resource pool comprises the PSSCH resource and the PSCCH resource; or
each carrier is associated with a fixed time interval between the feedback resource and the service resource; or
each service is associated with a fixed time interval between the feedback resource and the service resource, and the service comprises a Quality of Service (QoS) related parameter and/or a Per Package Per Priority (PPPP).

8. The resource indication method according to claim 6, wherein when the feedback resources are associated with the service resources in the frequency domain, each feedback resource has a same frequency-domain start point and a same frequency domain size as the corresponding service resource; or
the frequency domain start point of each feedback resource is an M^{th} resource unit of the corresponding service resource, the frequency domain size is a fixed numerical unit, and M is a positive integer; or
the feedback resources are associated with carriers and/or a root resource pool,
wherein the resource unit is a Resource Element (RE), a Physical Resource Block (PRB) or a sub-channel.

9. The resource indication method according to claim 6, wherein the selecting the PSSCH resource and the PSCCH resource comprises:
selecting a target resource pool satisfying an association relationship between the feedback resources and the service resources in the time domain in accordance with a service delay and a capability of the receiving end for receiving, processing and transmitting a feedback as well as the association relationship, and selecting the service resource from the selected target resource pool.

10. A resource indication method for a receiving end, comprising:
acquiring feedback resources used by the receiving end in unicasting and/or multicasting transmission and indicated by a transmitting end, the feedback resources at least comprising a Hybrid Automatic Repeat Request (HARQ) Acknowledgement (ACK) feedback resource or an HARQ Negative Acknowledgement (NACK) feedback resource for the receiving end.

11. The resource indication method according to claim 10, wherein the acquiring the feedback resources used by the receiving end in the unicasting and/or multicasting transmission and indicated by the transmitting end comprises:
acquiring a Physical Sidelink Shared Channel (PSSCH) resource indicated by the transmitting end through Scheduling Control Information (SCI) in a Physical Sidelink Control Channel (PSCCH) resource, selected service resources being associated with the feedback resources and comprising the PSSCH resource or the PSCCH resource; and
determining the feedback resources in accordance with a preconfigured association relationship between the service resources and the feedback resources as well as the service resources.

12. The resource indication method according to claim 11, wherein the determining the feedback resources in accordance with the preconfigured association relationship between the service resources and the feedback resources as well as the service resources comprises:
determining the feedback resources in accordance with the preconfigured association relationship between the service resources and the feedback resources, position information about each feedback resource associated with the corresponding service resource and indicated by the transmitting end, and the service resources; or
determining whether the service resource is associated with the corresponding feedback resource in accordance with a first target field message in the SCI, and in the case that the service resource is associated with the corresponding feedback resource, determining the feedback resources in accordance with the preconfigured association relationship between the service resources and the feedback resources as well as the service resources,
wherein the first target field message comprises at least one of a destination Identity (ID), a destination group ID, a source node ID, a link ID and a predetermined field message.

13. The resource indication method according to claim 10, wherein prior to acquiring the feedback resources used by the receiving end in the unicasting and/or multicasting transmission and indicated by the transmitting end, the resource indication method further comprises:
determining a codeword, a sequence and/or an offset value used by the receiving end for feedback in a connection establishment procedure with the receiving end or in accordance with a second target field message in SCI, wherein the second target field message comprises at least one of a destination ID, a group ID, a source node ID, a link ID and an offset indication field.

14. The resource indication method according to claim 13, wherein subsequent to acquiring the feedback resources used by the receiving end in the unicasting and/or multicasting transmission and indicated by the transmitting end, the resource indication method further comprises:
transmitting a feedback result on the feedback resources using the codeword, the sequence and/or the offset value.

15. The resource indication method according to claim 11, wherein when the service resources are associated with the feedback resources, the feedback resources are associated with the service resources in a time domain and/or a frequency domain.

16. The resource indication method according to claim 15, wherein when the feedback resources are associated with the service resources in the time domain, the feedback resources are mapped to the service resources respectively in the time domain, each feedback resource is spaced apart from the corresponding service resource in the time domain by N time units, each time unit comprises an Orthogonal Frequency Division Multiplexing (OFDM) symbol, a Transmission Time Interval (TTI) and a transmission subframe, and N is a positive integer; or
each resource pool is associated with a time interval corresponding to the feedback resource, and the resource pool comprises the PSSCH resource and the PSCCH resource; or
each carrier is associated with a fixed time interval between the feedback resource and the service resource; or
each service is associated with a fixed time interval between the feedback resource and the service resource, and the service comprises a Quality of Service (QoS) related parameter and/or a Per Package Per Priority (PPPP).

17. The resource indication method according to claim 15, wherein when the feedback resources are associated with the service resources in the frequency domain, each feedback resource has a same frequency-domain start point and a same frequency domain size as the corresponding service resource; or
the frequency domain start point of each feedback resource is an M^{th} resource unit of the corresponding service resource, the frequency domain size is a fixed numerical unit, and M is a positive integer; or
the feedback resources are associated with carriers and/or a root resource pool,
wherein the resource unit is a Resource Element (RE), a Physical Resource Block (PRB) or a sub-channel.

18. The resource indication method according to claim 16, wherein the determining the feedback resources in accordance with the preconfigured association relationship between the service resources and the feedback resources as well as the service resources comprises:
determining a target resource pool corresponding to the service resources;
determining a target time interval associated with the target resource pool in accordance with a preconfigured association relationship between pool resources and time intervals corresponding to the feedback resources; and
determining the feedback resources corresponding to the target time interval.

19. A communication device, which is a transmission end and comprises a transceiver, a memory, a processor, and a program stored in the memory and executed by the processor, wherein the processor is configured to execute the program so as to implement the steps of the resource indication method according to any one of claims 1 to 9.

20. A computer-readable storage medium storing therein a computer program, wherein the computer program is executed by a processor so as to implement the steps of the resource indication method according to any one of claims 1 to 9.

21. A communication device, which is a receiving end and comprises a transceiver, a memory, a processor, and a program stored in the memory and executed by the processor, wherein the processor is configured to execute the program so as to implement the steps of the resource indication method according to any one of claims 10 to 18.

22. A computer-readable storage medium storing therein a computer program, wherein the computer program is executed by a processor so as to implement the steps of the resource indication method according to any one of claims 10 to 18.

23. A communication device, which is a transmitting end and comprises a first indication module configured to indicate feedback resources used by a receiving end in unicasting and/or multicasting transmission to the receiving end, the feedback resources at least comprising a Hybrid Automatic Repeat Request (HARQ) Acknowledgement (ACK) feedback resource or an HARQ Negative Acknowledgement (NACK) feedback resource for the receiving end.

24. A communication device, which is a receiving end and comprises a first acquisition module configured to acquire feedback resources used by the receiving end in unicasting and/or multicasting transmission and indicated by a transmitting end, the feedback resources at least comprising a Hybrid Automatic Repeat Request (HARQ) Acknowledgement (ACK) feedback resource or an HARQ Negative Acknowledgement (NACK) feedback resource for the receiving end.
